# EUROPEAN PATENT SPECIFICATION

(11) **EP 2 420 483 B1**
(45) Date of publication and mention of the grant of the patent: **28.09.2016**
(21) Application number: 10764544.2
(22) Date of filing: 16.04.2010
(51) Int. Cl.: C04B 35/5831, C04B 41/87, C04B 41/00, C04B 41/45, C22C 26/00

(54) **CUBIC BORON NITRIDE SINTERED COMPACT AND COATED CUBIC BORON NITRIDE SINTERED COMPACT**
WÜRFELFÖRMIGER GESINTERTER BORNITRID-PRESSKÖRPER UND BESCHICHTETER WÜRFELFÖRMIGER GESINTERTER BORNITRID-PRESSKÖRPER
PIÈCE FRITTÉE DE NITRURE DE BORE CUBIQUE ET PIÈCE FRITTÉE DE NITRURE DE BORE CUBIQUE REVÊTUE

(30) Priority: 17.04.2009 JP 2009100642
(43) Date of publication of application: 22.02.2012
(73) Proprietor: Tungaloy Corporation, Iwaki-shi Fukushima 9701144 (JP)
(72) Inventor: FUKUSHIMA, Yuichiro, Fukushima 9701144 (JP); UMEMURA, Takashi, Fukushima 9701144 (JP)
(74) Representative: Vossius & Partner Patentanwälte Rechtsanwälte mbB
(86) International application number: PCT/JP2010/056873
(87) International publication number: WO 2010/119962

(56) References cited:
- EP-A2- 1 780 186
- WO-A1-2006/046124
- WO-A1-2006/046753
- CN-A- 101 084 169
- JP-A- 7 082 031
- JP-A- 9 011 006
- JP-A- 61 197 469
- JP-A- 2003 236 707
- JP-A- 2006 247 779

## Description

### TECHNICAL FIELD

The present invention relates to a cubic boron nitride sintered body and coated cubic boron nitride sintered body. More specifically, it relates to a cubic boron nitride-containing sintered body and coated cubic boron nitride sintered body optimum for a cutting tool, or wear resistant tool.

### BACKGROUND ART

Cubic boron nitride has high hardness next to that of diamond and excellent thermal conductivity, and has characteristics that it has low affinity to iron. A cubic boron nitride sintered body comprising cubic boron nitride and a binder phase of a metal or ceramics has been applied to a cutting tool and a wear resistant tool, etc. As the prior art techniques concerning the cubic boron nitride sintered body, there is a cubic boron nitride sintered body comprising cubic boron nitride, aluminum oxide, aluminum nitride and/or aluminum boride, titanium carbide, titanium nitride and/or titanium carbonitride and titanium boride (for example, see JP H07-082031 A).

EP 1 780 186 A2 discloses a cutting tool insert composed of a composite comprising a cBN-phase and a binder phase comprising a titaniumcarbonitride phase and a TiB₂ phase. In the XRD pattern from the composite using CuKa-radiation, the peak height ratio of the strongest (101) TiB₂ peak and the strongest cBN (111) peak is less than 0.06, the (220) peak from the titanium carbonitride phase in the XRD-pattern intersects both vertical lines of the PDF-lines of TiC (PDF 32-1383) and TiN (PDF 38-1420) and the lowest intersected point height is at least 0.15 of the maximum (220) peak height of the ceramic binder phase.

WO 2006/046753 A1 discloses a cubic boron nitride sintered material constituted from cubic boron nitride particles that are bound by a binder phase. The binder phase contains a carbide of at least one kind of metal element selected from among metals of groups 4, 5 and 6 of the periodic table and a nitride of at least one kind of metal element selected from among metals of groups 4, 5 and 6 of the periodic table coexisting therein.

JP 61 197469 A discloses a method for producing a cubic boron nitride based sintered material for cutting tools.

### SUMMARY OF THE INVENTION

### PROBLEMS TO BE SOLVED BY THE INVENTION

In the trend that the cutting conditions become more severe than the conventional ones to improve processing efficiency, it has been demanded to elongate tool lifetime than before. However, in the cubic boron nitride sintered body described in JP H07-082031 A, it cannot sufficiently comply with such demands any more. The present invention is to solve such a problem, and an object thereof is to provide a cubic boron nitride sintered body and a coated cubic boron nitride sintered body which can heighten fracture resistance and toughness without lowering wear resistance, whereby elongating tool lifetime of a cutting tool or a wear resistant tool.

### MEANS TO SOLVE THE PROBLEMS

The present inventors have carried out researches on a cubic boron nitride sintered body, and found out that it is important to restrain propagation of generated cracks to heighten toughness of the cubic boron nitride sintered body, and for establishing the object, it is effective that a binder phase of the cubic boron nitride sintered body is to have many grain boundaries, and particles of the binder phase be firmly bonded, whereby they have accomplished the present invention.

The present invention relates to a cubic boron nitride sintered body as defined by claim 1 and a coated cubic boron nitride sintered body as defined by claim 3.

In the present invention, the Bragg angle 2θ of each diffraction line means a Bragg angle 2θ in which an X-ray diffraction intensity of each diffraction line shows the maximum value (peak intensity), and the distance between the Bragg angle 2θ of the (200) plane diffraction line of titanium carbonitride and the Bragg angle 2θ of the (200) plane diffraction line of titanium nitride means an absolute value between the Bragg angle 2θs in which each X-ray diffraction intensity shows the maximum value (peak intensity). Also, the full width at half maximum intensity (FWHM) of each diffraction line means a peak width at which the maximum value (peak intensity) of the X-ray diffraction intensity with regard to each diffraction line becomes a half.

Preferably, in the X-ray diffraction measurement using Cu-Kα line, a peak intensity ratio (I_{TiN}/I_{TiCN}) of a peak intensity I_{TiN} of the (200) plane diffraction line of titanium nitride to a peak intensity I_{TiCN} of the (200) plane diffraction line of titanium carbonitride is 0.1 to 0.5. The cubic boron nitride sintered body is preferably a coated cubic boron nitride sintered body in which a film is coated on the surface of these cubic boron nitride sintered bodies.

### EFFECTS OF THE INVENTION

The cubic boron nitride sintered body and the coated cubic boron nitride sintered body of the present invention are excellent in wear resistance, fracture resistance and toughness. Thus, it can be obtained the effects that lifetimes of the tools can be elongated when the cubic boron nitride sintered body and the coated cubic boron nitride sintered body of the present invention are used as a cutting tool or a wear resistant tool.

### BRIEF DESCRIPTION OF THE DRAWING

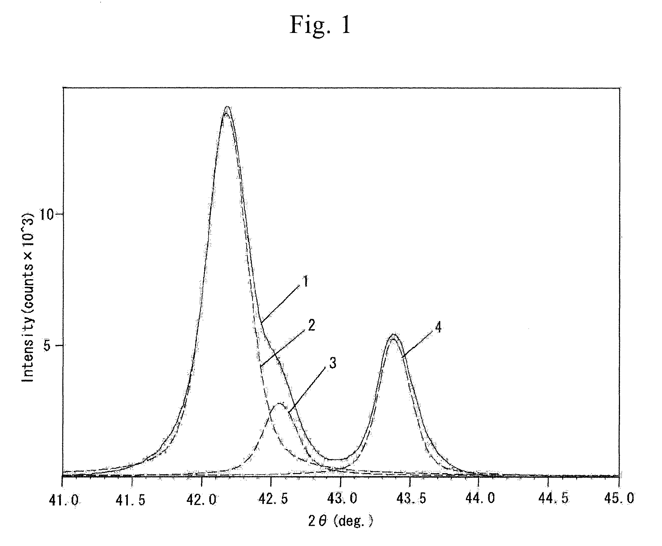

[Fig. 1] This is a drawing showing an X-ray diffraction pattern of the cubic boron nitride sintered body of the present invention.

### EMBODIMENT TO CARRY OUT THE INVENTION

The cubic boron nitride sintered body of the present invention comprises a binder phase, cubic boron nitride and inevitable impurities. In the cubic boron nitride of the present invention, if an amount of the binder phase becomes much in exceeding 80% by volume based on the whole cubic boron nitride sintered body, fracture resistance is lowered, while if an amount of the binder phase becomes less than 20% by volume based on the whole cubic boron nitride sintered body, wear resistance is lowered, so that a cubic boron nitride sintered body comprises 20 to 80% by volume of the binder phase based on the whole cubic boron nitride sintered body, 20 to 80% by volume of cubic boron nitride based on the whole cubic boron nitride sintered body and inevitable impurities. More preferably, it is a cubic boron nitride sintered body comprising 30 to 70% by volume of the binder phase based on the whole cubic boron nitride sintered body, 70 to 30% by volume of cubic boron nitride based on the whole cubic boron nitride sintered body and inevitable impurities, most preferably it comprises 40 to 60% by volume of the binder phase, 60 to 40% by volume of cubic boron nitride and inevitable impurities.

The binder phase of the present invention contains titanium nitride and titanium carbonitride. The binder phase of the present invention may be constituted by titanium nitride and titanium carbonitride, but other than titanium nitride and titanium carbonitride, it may preferably contain at least one of a carbide, nitride, boride and/or silicate of elements of Group 4 (Ti, Zr, Hf, etc.), 5 (V, Nb, Ta, etc.), 6 (Cr, Mo, W, etc.) of the Periodic Table or aluminum and mutual solid solutions thereof, and/or Fe, Co, Ni, Cr, Mo, W and alloys thereof. As a binder phase other than titanium nitride and titanium carbonitride, there may be specifically mentioned titanium boride, aluminum oxide, aluminum nitride, aluminum boride, etc.

By simultaneously adding titanium nitride and titanium carbonitride as starting powder, a binder phase of the present invention can be obtained. By sintering a mixture of titanium compounds wherein contents of carbon and nitrogen are different from each other, mutual solid solution is made easily formed and bonding between binder phase particles can be made firm. When the cubic boron nitride sintered body of the present invention is subjected to X-ray diffraction measurement which uses a Cu-Kα line, a distance between the Bragg angle 2θ of the (200) plane diffraction line of titanium carbonitride and the Bragg angle 2θ of the (200) plane diffraction line of titanium nitride became 0.30° or more and 0.60° or less. If the distance became less than 0.30°, binding between the binder phase particles becomes difficultly strengthened, while if this distance becomes large exceeding 0.60°, reaction resistance with iron under high temperature is lowered, so that the distance is defined to be 0.30° or more and 0.60° or less. The distance is preferably 0.30° or more and 0.50° or less, and more preferably 0.30° or more and 0.45° or less.

The distance can be controlled by adjusting the position of the Bragg angle 2θ of the (200) plane diffraction line of titanium nitride and the position of the Bragg angle 2θ of the (200) plane diffraction line of titanium carbonitride. The Bragg angle 2θ of the (200) plane diffraction line of titanium nitride can be controlled by a ratio of a metal element and non-metal element contained in the titanium nitride powder as a starting powder. Specifically, as an atomic ratio x₁ of a non-metal element (N) to a metal element (Ti) contained in the titanium nitride powder in a starting powder becomes smaller than 1, the Bragg angle 2θ of the (200) plane diffraction line of titanium nitride of the sintered body shifted to a higher angle side. For example, with regard to the Bragg angle 2θ of the (200) plane diffraction line of titanium nitride of the sintered body, when x₁=1, then 2θ=42.49 to 42.59°, when x₁=0.8, then 2θ=42.58 to 42.68°, and when x₁=0.6, then 2θ=42.66 to 42.76°. On the other hand, the Bragg angle 2θ of the (200) plane diffraction line of titanium carbonitride can be controlled by a ratio of the metal element and the non-metal element, and a ratio of carbon and nitrogen contained in the titanium carbonitride powder in the starting powder. Specifically, as an atomic ratio x₂ of the non-metal element (CN) to the metal element (Ti) contained in the titanium carbonitride powder in the starting powder becomes smaller than 1, the Bragg angle 2θ of the (200) plane diffraction line of titanium carbonitride of the sintered body shifted to a higher angle side. For example, when an atomic ratio x₃ of carbon based on the sum of carbon and nitrogen contained in the titanium carbonitride powder in the starting powder is 0.5, with regard to the Bragg angle 2θ of the (200) plane diffraction line of titanium carbonitride of the sintered body, when x₂=1, then 2θ=42.08 to 42.18°, when x₂=0.8, then 2θ=42.13 to 42.23°, and when x₂=0.6, then 2θ=42.21 to 42.31°. Also, if the atomic ratio of carbon based on the sum of carbon and nitrogen contained in the titanium carbonitride powder in the starting powder becomes large, the Bragg angle 2θ of the (200) plane diffraction line of the titanium carbonitride of the sintered body shifted to a lower angel side. For example, when the atomic ratio x₂ of the non-metal element (CN) based on the metal element (Ti) contained in the titanium carbonitride powder in the starting powder is made 1, and when the atomic ratio x₃ of carbon based on the sum of carbon and nitrogen contained in the titanium carbonitride powder in the starting powder is made 0.4, the Bragg angle 2θ of the (200) plane diffraction line of titanium carbonitride of the sintered body becomes 2θ=42.16 to 42.26°. Also, when the atomic ratio x₂ of the non-metal element (CN) based on the metal element (Ti) contained in the titanium carbonitride powder in the starting powder is made 1, and the atomic ratio x₃ of carbon based on the sum of carbon and nitrogen contained in the titanium carbonitride powder in the starting powder is made 0.7, then the Bragg angle 2θ of the (200) plane diffraction line of titanium carbonitride of the sintered body becomes 2θ=41.91 to 42.01°. As the starting powder for the cubic boron nitride sintered body of the present invention, it is preferred to use a titanium nitride powder wherein the atomic ratio x₁ of the non-metal element (N) based on the metal element (Ti) contained in the titanium nitride powder is 1, and a titanium carbonitride powder wherein the atomic ratio x₂ of the non-metal element (CN) based on the metal element (Ti) contained in the titanium carbonitride powder is 1, and the atomic ratio x₃ of carbon based on a sum of carbon and nitrogen contained in the titanium carbonitride powder is 0.4 to 0.7. The reason why the titanium nitride powder having x₁=1 and the titanium carbonitride powder having x₂=1 are preferably used than using a titanium nitride powder having x₁ of less than 1 and a titanium carbonitride powder having x₂ of less than 1 is that the titanium nitride powder having x₁ of less than 1 and the titanium carbonitride powder having x₂ of less than 1 contain excessive amount of the metal element than that of the non-metal element, so that the excess metal element likely forms reaction product(s) with cubic boron nitride, Al, titanium compound, etc., whereby the obtained sintered body has unclear grain boundaries, cracks of which being easily propagated, and tends to show lowered strength.

When the peak intensity of the (200) plane diffraction line of titanium nitride contained in the cubic boron nitride sintered body of the present invention is represented by I_{TiN}, and the peak intensity of the (200) plane diffraction line of titanium carbonitride is I_{TiCN}, if the peak intensity ratio of I_{TiN} to I_{TiCN} (I_{TiN}/I_{TiCN}) is less than 0.1, an amount of titanium nitride is a little, so that reaction resistance with iron is lowered. To the contrary, if (I_{TiN}/I_{TiCN}) becomes larger exceeding 0.5, an amount of titanium nitride contained in the binder phase of the present invention is larger, so that mechanical strength of the cubic boron nitride sintered body is lowered. Thus, the peak intensity ratio (I_{TiN}/I_{TiCN}) of I_{TiN} to I_{TiCN} is more preferably 0.1 to 0.5, and most preferably 0.1 to 0.3. The peak intensity ratio (I_{TiN}/I_{TiCN}) can be controlled by a formulation ratio of titanium nitride powder and titanium carbonitride powder in the starting powder. Specifically, when the formulation ratio of the titanium nitride powder to the titanium carbonitride powder contained in the starting powder is made titanium nitride powder/titanium carbonitride powder=0.1 to 0.5 in volume ratio, the peak intensity ratio (I_{TiN}/I_{TiCN}) can be made 0.1 to 0.5.

When the FWHM of the (200) plane diffraction line of titanium carbonitride contained in the cubic boron nitride sintered body of the present invention shows 0.30° or more, then, an average particle size of titanium carbonitride becomes fine so that mechanical strength of the cubic boron nitride sintered body is increased. However, if the FWHM of the (200) plane diffraction line of titanium carbonitride becomes large exceeding 0.50°, then, an average particle size of titanium carbonitride becomes too fine and crack propagation mainly becomes breakage of the grain boundary, whereby toughness is lowered. Thus, the FWHM of the (200) plane diffraction line of titanium carbonitride is defined to be 0.30° or more and 0.50° or less. The FWHM is preferably 0.30° or more and 0.45° or less, more preferably 0.30° or more and 0.40° or less. The FWHM can be controlled by an average particle size of titanium carbonitride in the starting powder and a mixing time by a ball mill. Specifically, by making the average particle size of titanium carbonitride powder 0.8 to 1.5 µm, and making the mixing time by a ball mill 1 to 120 hours, the FWHM of the (200) plane diffraction line of titanium carbonitride can be made 0.30° or more and 0.50° or less.

When the FWHM of the (200) plane diffraction line of titanium nitride contained in the cubic boron nitride sintered body of the present invention shows 0.25° or more, then, an average particle size of titanium nitride becomes fine so that mechanical strength of the cubic boron nitride sintered body is further increased. If the FWHM of the (200) plane diffraction line of titanium nitride becomes large exceeding 0.45°, an average particle size of titanium nitride becomes fine and crack propagation mainly becomes breakage of the grain boundary, whereby toughness tends to be lowered. Thus, the FWHM of the (200) plane diffraction line of titanium nitride is 0.25° or more and 0.45° or less. The FWHM is preferably 0.25° or more and 0.40° or less, more preferably 0.25° or more and 0.35° or less. The FWHM can be controlled by an average particle size of titanium nitride in the starting powder and a mixing time by a ball mill. Specifically, by making the average particle size of titanium nitride powder 0.8 to 1.5 µm, and making the mixing time by a ball mill 1 to 120 hours, the FWHM of the (200) plane diffraction line of titanium nitride can be made 0.25° or more and 0.45° or less.

The (200) plane diffraction line of titanium carbonitride and the Bragg angle 2θ, the FWHM and the peak intensity of the (200) plane diffraction line of titanium nitride can be measured by using a commercially available X-ray diffraction device. For example, by using an X-ray diffraction device RINT TTRIII manufactured by Rigaku Corporation, when an X-ray diffraction measurement in 2θ/θ optical concentration system using a Cu-Kα line is carried out under the conditions of an output: 50 kV, 250 mA, an incident side solar slit: 5°, a divergence longitudinal slit: 1/2°, a divergence longitudinal restriction slit: 10mm, a scattering slit: 2/3°, a light receiving side solar slit: 5°, a light receiving slit: 0.15 mm, a BENT monochrometer, a light receiving monochromatic slit: 0.8 mm, a sampling width: 0.02°, a scan speed: 0.1°/min, and a 2θ measurement range: 40 to 46°, a Bragg angle 2θ, a FWHM and a peak intensity can be measured with regard to the (200) plane diffraction line of titanium carbonitride and the (200) plane diffraction line of titanium nitride. When the (200) plane diffraction line of titanium carbonitride and the (200) plane diffraction line of titanium nitride are overlapped, peak separation is carried out by using an analyzing software attached to the X-ray diffraction device, the Bragg angles 2θ of the (200) plane diffraction line of titanium carbonitride and the (200) plane diffraction line of titanium nitride, the FWHM and the peak intensity can be confirmed individually.

The contents (% by volume) of the cubic boron nitride (cBN) and the respective phases (for example, TiN, Ti(C_{0.5}N_{0.5}), Ti(C_{0.8}N_{0.2}), Ti(C_{0.2}N_{0.8}), TiB₂, AlN, Al₂O₃, etc.) other than the cBN contained in the cubic boron nitride sintered body of the present invention can be obtained by an SEM observation, EDS analysis and X-ray diffraction measurement. Specifically, the SEM observation and EDS analysis are firstly carried out with regard to the sectional structure of the cubic boron nitride sintered body, a content (% by volume) of the cBN is obtained from the surface area of the cBN which is obtained from an image analysis of the SEM photograph, and the remainder is judged to be a content (% by volume) of the binder phase. Next, the cubic boron nitride sintered body is subjected to an X-ray diffraction measurement to identify the respective phases of the cubic boron nitride sintered body, as well as to measure peak intensities of the respective phases. Further, peak intensity ratios of the respective phases relative to the peak intensity of the cBN in the cubic boron nitride sintered body are calculated. Next, powders with the same components of the respective phases contained in the cubic boron nitride sintered body are prepared. By making a content (% by volume) of the cBN obtained by the SEM observation of the cubic boron nitride sintered body and a formulation amount (% by volume) of the cBN powder the same, and with regard to the powder other than cBN, by changing a formulation ratio thereof with some points, these powders are formulated. At this time, the sum of formulation amounts (% by volume) of powders other than cBN is made the same as the content (% by volume) of the binder phase of the cubic boron nitride sintered body obtained by the SEM observation. The powders formulated with such a ratio are mixed well. X-ray diffraction measurement is carried out with regard to the obtained mixed powder, peak intensities of the respective phases are measured, and a peak intensity ratio of the respective phases relative to the peak intensity of the cBN in the mixed powder is calculated. Next, a calibration curve which shows the relation between the peak intensity ratio of the respective phases relative to the peak intensity of the cBN in the mixed powder, and a formulation ratio (% by volume) of the respective phases is obtained. By using the calibration curve, from the peak intensity ratio of the respective phases other than the cBN in the cubic boron nitride sintered body, a content (% by volume) of the respective phases other than the cBN in the cubic boron nitride sintered body can be obtained.

The cubic boron nitride sintered body of the present invention is constituted by 20 to 80% by volume of a binder phase based on a whole cubic boron nitride sintered body which comprises aluminum oxide: 3 to 30% by volume based on the whole cubic boron nitride sintered body, a sum of titanium nitride and titanium carbonitride: 10 to 60% by volume based on the whole cubic boron nitride sintered body, titanium boride: 1 to 30% by volume based on the whole cubic boron nitride sintered body, one or two kinds of aluminum nitride and aluminum boride: 10% by volume or less based on the whole cubic boron nitride sintered body, 20 to 80% by volume of cubic boron nitride based on the whole cubic boron nitride sintered body and inevitable impurities, so that wear resistance and toughness of the cubic boron nitride sintered body are well balanced and the result of further elongating lifetime can be obtained when it is used as a tool. This is because the following reasons. In the preparation process, aluminum powder in the starting powder binds to oxygen adsorbed to the starting powder or oxygen in the air to form aluminum oxide, but if an amount of the aluminum oxide is less than 3% by volume based on the whole cubic boron nitride sintered body, toughness is lowered, while if an amount of the aluminum oxide is contrary to be much exceeding 30% by volume based on the whole cubic boron nitride sintered body, wear resistance is lowered. If the sum of the titanium nitride and titanium carbonitride is less than 10% by volume based on the whole cubic boron nitride sintered body, wear resistance is lowered, while if the sum of the titanium nitride and titanium carbonitride is contrary to be much exceeding 60% by volume, other binder phase components are relatively small so that toughness and heat resistance are lowered. If an amount of titanium boride is less than 1% by volume based on the whole cubic boron nitride sintered body, toughness is lowered, while if an amount of the titanium boride is contrary to be much exceeding 30% by volume based on the whole cubic boron nitride sintered body, wear resistance is lowered. If an amount(s) of one or two of the aluminum nitride and aluminum boride becomes much exceeding 10% by volume based on the whole cubic boron nitride sintered body, mechanical strength and toughness is lowered. More preferably, the binder phase comprises aluminum oxide: 3 to 20% by volume, the sum of the titanium nitride and titanium carbonitride: 20 to 55% by volume, titanium boride: 1 to 20% by volume, and one or two of the aluminum nitride and aluminum boride: 9% by volume or less based on the whole cubic boron nitride sintered body, further preferably the binder phase comprises aluminum oxide: 3 to 15% by volume, the sum of the titanium nitride and titanium carbonitride: 30 to 55% by volume, titanium boride: 1 to 10% by volume, and one or two of the aluminum nitride and aluminum boride: 8% by volume or less.

As inevitably contained impurities in the cubic boron nitride sintered body of the present invention, there may be mentioned Cu, etc. migrated from the starting powder of the cubic boron nitride sintered body. Total amount of the inevitable impurities is generally 0.5% by weight or less based on the whole content of the cubic boron nitride sintered body, and it can be generally restrained to 0.2% by weight or less based on the whole content of the cubic boron nitride sintered body, so that they do not cause any effect on the characteristic values of the present invention. In the present invention, other component(s) which is not inevitable impurities may be contained with a small amount in addition to the cubic boron nitride, the binder phase and the inevitable impurities within the range which does not impair the characteristics of the cubic boron nitride sintered body of the present invention.

The coated film of the present invention comprises at least one selected from the element(s) of Group 4, 5 and 6 of the Periodic Table, a metal of Al and Si, an oxide, carbide, nitride or boride thereof, and a mutual solid solution thereof. Specifically, there may be mentioned TiN, TiC, TiCN, TiAlN, TiSiN, CrAlN, etc. The coated film may be preferably either a single layer or a laminated layer of two or more layers, and also preferably an alternately laminated film in which thin films having different compositions with a layer thickness of 5 to 200 nm are alternately laminated. If an average film thickness of the coated film is less than 0.5 µm, elongation effects of the expected tool lifetime become short, while if it exceeds 15 µm, fracture resistance tends to be lowered so that it is preferably 0.5 to 15 µm, and of these, more preferably 1 to 10 µm, and further preferably 1.5 to 5 µm.

The cubic boron nitride sintered body of the present invention can be prepared by mixing titanium carbonitride powder having an average particle size of 0.5 to 1.0 µm and an atomic ratio of carbon based on the sum of the carbon and nitrogen contained in the titanium carbonitride being 0.3 to 0.7, titanium nitride powder having an average particle size of 0.5 to 1.2 µm, aluminum powder, cubic boron nitride powder and paraffin, molding the obtained mixture, subjecting to vacuum heat treatment at a pressure of 1 x 10⁻³ Torr or less in vacuum at a temperature of 700 to 1000°C whereby removing an organic material such as paraffin, etc., placing in an ultra-high pressure and high temperature generating device, and sintering under the conditions of a pressure of 4 to 6 GPa and a temperature of 1400 to 1600°C.

The cubic boron nitride sintered body and the coated cubic boron nitride sintered body of the present invention are excellent in wear resistance, fracture resistance and toughness, so that they are preferably applied to a cutting tool or a wear resistant tool, and among these, when it is applied to a cutting tool, it is more preferred.

### EXAMPLES

### [Example 1]

By using cubic boron nitride (cBN) powder having an average particle size of 2 µm, Ti (C_{0.5}N_{0.5}) powder, Ti (C_{0.8}N_{0.2}) powder , Ti (C_{0.2}N_{0.8}) powder and TiN powder (each Ti compound with a stoichiometric composition wherein a ratio of the metal element and the non-metal element being 1:1 in an atomic ratio) each having an average particle size shown in Table 1, and Al powder having an average particle size of 2 µm, they were formulated to formulating compositions shown in Table 1. The formulated starting powder was placed in a cylinder for a ball mill with balls made of hard metal, a hexane solvent and paraffin, and subjected to mixing procedure by the ball mill for 48 hours. The mixed powder obtained by mixing and pulverizing with the ball mill was subjected to compacting, and then, deparaffinized under the conditions of 1x10⁻⁵ Torr at 850°C. The deparaffinized compacting mold was encapsulated into a metal capsule, the metal capsule was placed into an ultra-high pressure and high temperature generating device, and the material was sintered under the conditions of a pressure of 5.5 GPa, a temperature of 1500°C and a maintaining time of 30 minutes to prepare cubic boron nitride sintered bodies of Present product and Comparative product.

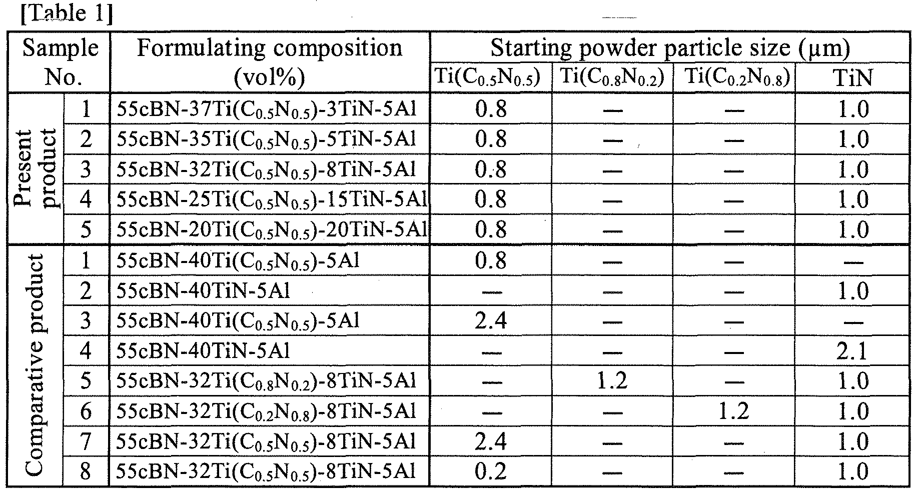

Sectional structures of the thus obtained cubic boron nitride sintered bodies were observed by SEM, and analyzed by EDS to obtain a content of cBN (% by volume) and a content of the binder phase (% by volume). Next, the cubic boron nitride sintered body was subjected to an X-ray diffraction measurement to identify the respective phases (cBN, Ti(C_{0.5}N_{0.5}), Ti(C_{0.8}N_{0.2}), Ti(C_{0.2}N_{0.8}), TiN, TiB₂, Al₂O₃, AlN, etc.) of the cubic boron nitride sintered body. Powders with the same composition (cBN, Ti(C_{0.5}N_{0.5}), Ti(C_{0.8}N_{0.2}), Ti(C_{0.2}N_{0.8}), TiN, TiB₂, Al₂O₃, AlN, etc.) as the respective phases contained in the cubic boron nitride sintered body were prepared. A content of the cBN obtained by the SEM observation of the cubic boron nitride sintered body and a formulation composition of the cBN powder were made the same with each other, and with regard to the powders other than the cBN, their formulation compositions were changed, and these powders were formulated. At this time, the sum of the powders other than cBN in terms of % by volume was made the same as the content (% by volume) of the binder phase obtained by the SEM observation of the cubic boron nitride sintered body. The powder formulated with such a ratio was mixed well. With regard to the obtained mixed powder, X-ray diffraction measurement was carried out to measure a peak intensity of each phase, and a peak intensity ratio of each phase based on the peak intensity of cBN was calculated. Next, peak intensity ratios of the respective phases relative to the peak intensity of the cBN, and a calibration curve showing the formulation compositions (% by volume) of the respective phases were obtained. By using the calibration curve, contents (% by volume) of the respective phases other than the cBN contained in the cubic boron nitride sintered body were obtained from the peak intensity ratios of the respective phases other than the cBN of the cubic boron nitride sintered body. Further, the fracture toughness value K_{1C} of the cubic boron nitride sintered body was measured. These results were shown in Table 2.

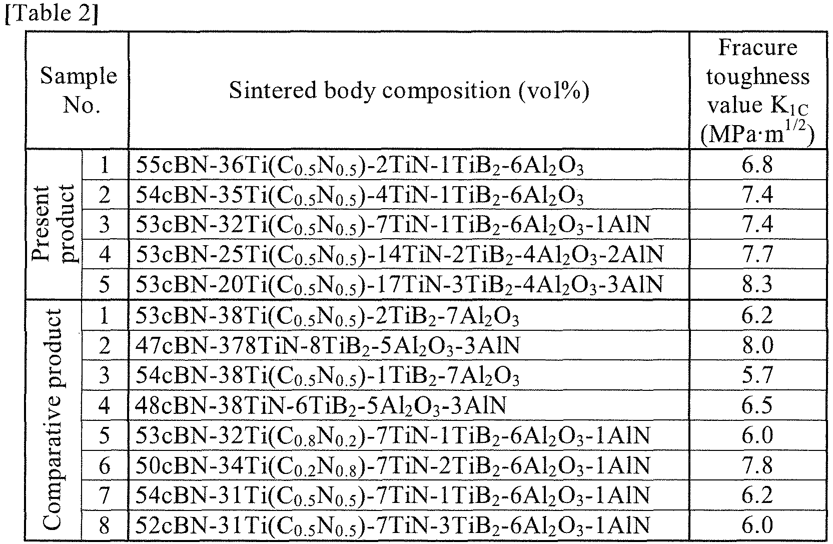

Next, with regard to the obtained sintered bodies, by using an X-ray diffraction device RINT TTRIII manufactured by Rigaku Corporation, an X-ray diffraction measurement in 2θ/θ optical concentration system using a Cu-Kα line was carried out under the conditions of an output: 50 kV, 250 mA, an incident side solar slit: 5°, a divergence longitudinal slit: 1/2°, a divergence longitudinal restriction slit: 10 mm, a scattering slit: 2/3°, a light receiving side solar slit: 5°, a light receiving slit: 0.15 mm, a BENT monochrometer, a light receiving monochromatic slit: 0.8 mm, a sampling width: 0.02°, a scan speed: 0.1°/min, and a 2θ measurement range: 40 to 46°. The obtained X-ray diffraction chart was subjected to peak separation, and with regard to the (200) plane diffraction line of titanium carbonitride (Ti (C_{0.2}N_{0.8}), Ti (C_{0.5}N_{0.5}) or Ti (C_{0.8}N_{0.2})) and the (200) plane diffraction line of titanium nitride (TiN) after peak separation, a Bragg angle 2θ, a peak intensity and a FWHM thereof were each measured, and these were shown in Table 3.

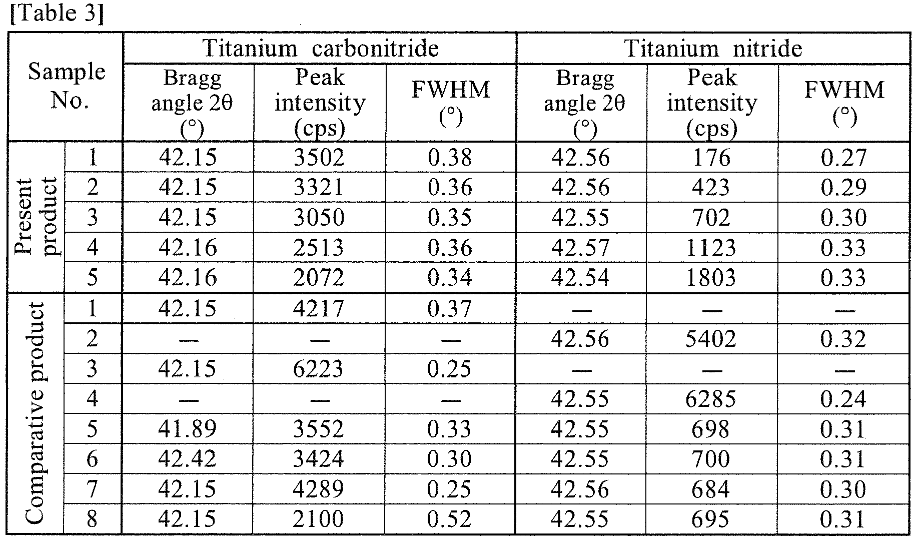

Also, a distance between the Bragg angle 2θ of the (200) plane diffraction line of titanium carbonitride and the Bragg angle 2θ of the (200) plane diffraction line of titanium nitride, and a peak intensity ratio (I_{TiN}/I_{TiCN}) of a peak intensity I_{TiN} of the (200) plane diffraction line of titanium nitride (TiN) to a peak intensity I_{TiCN} of the (200) plane diffraction line of titanium carbonitride (Ti (C_{0.2}N_{0.8}), Ti (C_{0.5}N_{0.5}) or Ti (C_{0.8}N_{0.2})) were calculated, and these were shown in Table 4.

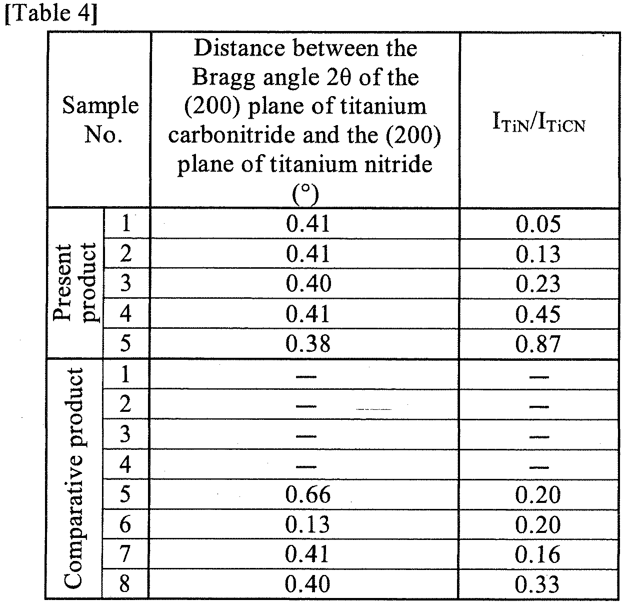

With regard to the present products and the comparative products, the sintered bodies were each cut to a predetermined shape with a wire-electrical discharge machine, subjected to brazing to a hard metal base and to finishing treatment by grinding to obtain cutting tools having a shape of cutting insert of ISO standard CNGA120408. By using these cutting inserts, the following mentioned Cutting tests (1) and (2) were carried out. These results are shown in Table 5.
Cutting test (1)
   Peripheral continuous dry cutting (lathe turning),
   Work piece material: SCM415H (HRC 60.9 to 61.7),
   Shape of work piece material: Cylinder ϕ63mm×L200mm,
   Cutting speed: 250 m/min,
   Cutting depth: 0.25 mm,
   Feed: 0.1 mm/rev,
   Shape of cutting insert: ISO standard CNGA120408,
   Evaluation: Cutting time until reaching to VBc=0.15mm or cutting time until fracture.
Cutting test (2)
   Peripheral lightly interrupted dry cutting (lathe turning),
   Work piece material: SCM435H (HRC60.9 to 61.7),
   Shape of work piece material: Cylinder with 90° V shaped two grooves ϕ48mm×L200mm,
   Cutting speed: 200 m/min,
   Cutting depth: 0.25 mm,
   Feed: 0.1 mm/rev,
   Shape of cutting insert: ISO standard CNGA120408,
   Evaluation: Cutting time until reaching to VBc=0.15mm or cutting time until fracture.

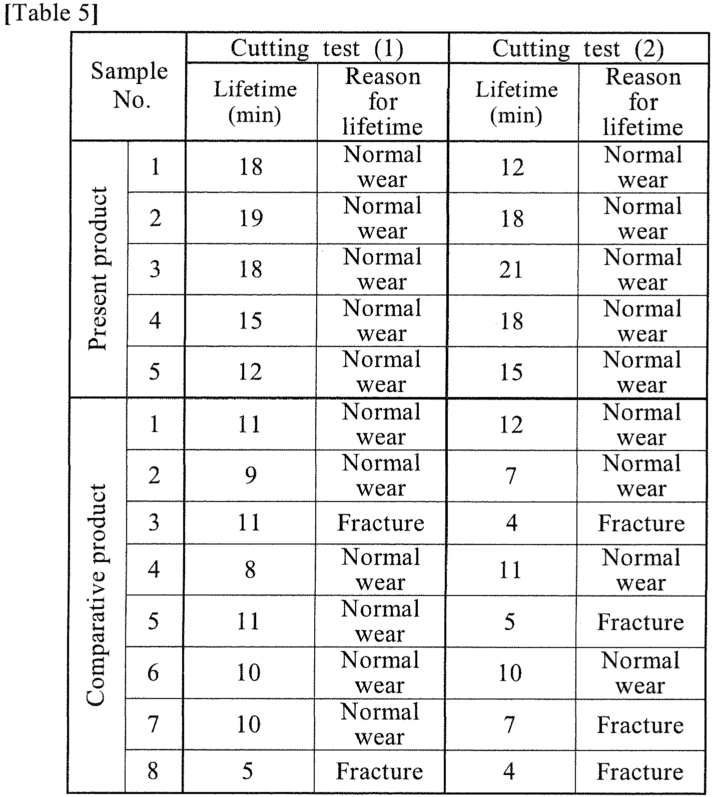

The sintered body of the present invention has high fracture toughness value K_{1C} as compared with that of the conventional cubic boron nitride sintered body, and as a result, fracture resistance at the time of cutting is increased, so that fracture is difficultly caused as compared with the conventional product in continuous cutting and lightly interrupted cutting. When a ratio of the peak intensity (I_{TiN}/I_{TiCN}) of the titanium nitride relative to the peak intensity of the titanium carbonitride is 0.1 to 0.5, particularly excellent cutting properties are shown, whereby tool lifetime is long.

### [Example 2]

On the surface of Present product 3 of Example 1 was subjected to coating treatment by using a PVD device. That coated thereon by TiN with an average film thickness of 3 µm was made Present product 6, and by TiAlN with an average film thickness of 3 µm was made Present product 7. With regard to Present products 6 and 7, the same Cutting texts (1) and (2) as in Example 1 were carried out. These results are shown in Table 6.

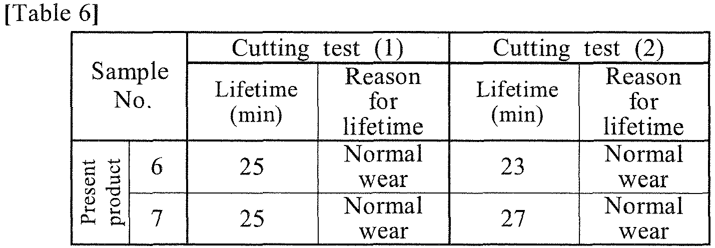

In the present products 6 and 7 in which a coating film has been covered, a tool lifetime could be further elongated than that of the present product 3 in which no coating film has been coated.

### UTILIZABILITY IN INDUSTRY

The cubic boron nitride sintered body and coated cubic boron nitride sintered body according to the present invention are excellent in wear resistance, fracture resistance and toughness, in particular, when they are used as a cutting tool or a wear resistant tool, a tool life time can be elongated so that industrial applicability is high.

### EXPLANATION OF REFERENCE NUMERALS

- 1: X-ray diffraction pattern before peak separation
- 2: (200) plane diffraction line of titanium carbonitride after peak separation
- 3: (200) plane diffraction line of titanium nitride after peak separation
- 4: (111) plane diffraction line of cubic boron nitride after peak separation

## Claims

1. A cubic boron nitride sintered body which comprises a binder phase containing titanium nitride and titanium carbonitride, cubic boron nitride and inevitable impurities, a distance between a Bragg angle 2θ of a (200) plane diffraction line of titanium carbonitride and a Bragg angle 2θ of a (200) plane diffraction line of titanium nitride in an X-ray diffraction measurement using a Cu-Kα line is 0.30° or more and 0.60° or less, and a full width at half maximum intensity of the (200) plane diffraction line of titanium carbonitride is 0.30° or more and 0.50° or less, wherein the full width at half maximum intensity of the (200) plane diffraction line of titanium nitride is 0.25° or more and 0.45° or less,
wherein the cubic boron nitride sintered body is constituted by, 20 to 80% by volume of a binder phase based on the whole cubic boron nitride sintered body which comprises
aluminum oxide: 3 to 30% by volume based on the whole cubic boron nitride sintered body,
a sum of titanium nitride and titanium carbonitride: 10 to 60% by volume based on the whole cubic boron nitride sintered body,
titanium boride: 1 to 30% by volume based on the whole cubic boron nitride sintered body,
one or two kinds of aluminum nitride and aluminum boride: 10% by volume or less based on the whole cubic boron nitride sintered body,
80 to 20% by volume of cubic boron nitride based on the whole cubic boron nitride sintered body and
inevitable impurities.

2. The cubic boron nitride sintered body according to Claim 1, wherein a peak intensity ratio (I_{TiN}/I_{TiCN}) of a peak intensity I_{TiN} of the (200) plane diffraction line of titanium nitride to a peak intensity I_{TiCN} of the (200) plane diffraction line of titanium carbonitride in an X-ray diffraction measurement using a Cu-Kα line is 0.1 to 0.5.

3. A coated cubic boron nitride sintered body which comprises a film being coated on the surface of the cubic boron nitride sintered body according to any one of Claims 1 to 2.

## Patentansprüche

1. Gesinterter Körper aus kubischem Bornitrid, der eine Bindemittelphase aufweist, die Titannitrid und Titankarbonitrid, kubisches Bornitrid und unvermeidliche Verunreinigungen enthält, wobei ein Abstand zwischen einem Bragg-Winkel 2θ einer Beugungslinie der (200)-Ebene von Titankarbonitrid und einem Bragg-Winkel 2θ einer Beugungslinie der (200)-Ebene von Titannitrid in eine Röntgenbeugungsmessung mittels einer Cu-Kα-Linie 0,30° oder mehr und 0,60° oder weniger beträgt, und eine Halbwertsbreitenintensität der Beugungslinie der (200)-Ebene von Titankarbonitrid 0,30° oder mehr und 0,50° oder weniger beträgt, wobei die Halbwertsbreitenintensität der Beugungslinie der (200)-Ebene von Titannitrid 0,25° oder mehr und 0,45° oder weniger beträgt,
wobei der gesinterter Körper aus kubischem Bornitrid sich zusammensetzt aus:
20 bis 80 Volumen-% einer Bindemittelphase bezogen auf den gesamten gesinterten Körper aus kubischem Bornitrid, die aufweist
Aluminiumoxid: 3 bis 30 Volumen-% bezogen auf den gesamten gesinterten Körper aus kubischem Bornitrid,
einer Summe von Titannitrid und Titankarbonitrid: 10 bis 60 Volumen-% bezogen auf den gesamten gesinterten Körper aus kubischem Bornitrid,
Titanborid: 1 bis 30 Volumen-% bezogen auf den gesamten gesinterten Körper aus kubischem Bornitrid,
eine oder zwei Arten von Aluminiumnitrid und Aluminiumborid: 10 Volumen-% oder weniger bezogen auf den gesamten gesinterten Körper aus kubischem Bornitrid,
80 bis 20 Volumen-% kubisches Bornitrid bezogen auf den gesamten gesinterten Körper aus kubischem Bornitrid und unvermeidliche Verunreinigungen.

2. Gesinterter Körper aus kubischem Bornitrid nach Anspruch 1, wobei ein Spitzenintensitätsverhältnis (I_{TiN}/I_{TiCN}) einer Spitzenintensität I_{TiN} der Beugungslinie der (200)-Ebene von Titannitrid zu einer Spitzenintensität I_{TiCN} der Beugungslinie der (200)-Ebene von Titankarbonitrid in einer Röntgenbeugungsmessung mittels einer Cu-Kα-Linie 0,1 bis 0,5 beträgt.

3. Beschichteter gesinterter Körper aus kubischem Bornitrid, der einen Film aufweist, der auf die Oberfläche des gesinterten Körpers aus kubischem Bornitrid nach einem der Ansprüche 1 bis 2 aufgetragen wird.

## Revendications

1. Pièce frittée en nitrure de bore cubique comprenant une phase liante contenant du nitrure de titane et du carbonitrure de titane, du nitrure de bore cubique, et des impuretés inévitables, l'intervalle entre un angle de Bragg 2θ d'une ligne de diffraction à partir du plan (200) du carbonitrure de titane et un angle de Bragg 2θ d'une ligne de diffraction à partir du plan (200) du nitrure de titane dans une mesure de diffraction de rayons X au moyen d'une ligne Cu-Kα est compris entre 0,30° et 0,60°, et une largeur totale à la moitié de l'intensité maximale de la ligne de diffraction à partir du plan (200) du carbonitrure de titane est comprise entre 0,30° et 0,50°, la largeur totale à la moitié de l'intensité maximale de la ligne de diffraction à partir du plan (200) du nitrure de titane étant comprise entre 0,25° et 0,45°,
ladite pièce frittée en nitrure de bore cubique étant constituée de
20 à 80 % en volume d'une phase liante, sur la base de toute la pièce frittée en nitrure de bore cubique, laquelle comprend :
oxyde d'aluminium : 3 à 30 % en volume, sur la base de toute la pièce frittée en nitrure de bore cubique,
montant total de nitrure de titane et de carbonitrure de titane : 10 à 60 % en volume, sur la base de toute la pièce frittée en nitrure de bore cubique,
borure de titane : 1 à 30 % en volume, sur la base de toute la pièce frittée en nitrure de bore cubique,
une ou deux sortes de nitrure d'aluminium et de borure d'aluminium : 10 % ou moins en volume, sur la base de toute la pièce frittée en nitrure de bore cubique,
80 à 20 % en volume de nitrure de bore cubique, sur la base de toute la pièce frittée en nitrure de bore cubique, et
des impuretés inévitables.

2. Pièce frittée en nitrure de bore cubique selon la revendication 1, où un rapport d'intensité de crête (I_{TiN}/I_{TiCN}) entre une intensité de crête I_{TIN} de la ligne de diffraction à partir du plan (200) du nitrure de titane et une intensité de crête I_{TICN} de la ligne de diffraction à partir du plan (200) du carbonitrure de titane dans une mesure de diffraction de rayons X au moyen d'une ligne Cu-Kα est compris entre 0,1 et 0,5.

3. Pièce frittée en nitrure de bore cubique revêtue, comportant un film revêtu à la surface de la pièce frittée en nitrure de bore cubique selon la revendication 1 ou la revendication 2.
